# EUROPÄISCHE PATENTSCHRIFT

(11) **EP 2 761 210 B1**
(45) Veröffentlichungstag und Bekanntmachung des Hinweises auf die Patenterteilung: **30.11.2016**
(21) Anmeldenummer: 12759695.5
(22) Anmeldetag: 14.09.2012
(51) Int. Cl.: F16J 1/09, F02F 3/00, F02F 3/22

(54) **ZWEITEILIGER STAHLKOLBEN FÜR BRENNKRAFTMASCHINEN**
TWO-PART STEEL PISTON FOR INTERNAL COMBUSTION ENGINES
PISTON EN ACIER EN DEUX PARTIES POUR MOTEURS À COMBUSTION INTERNE

(30) Priorität: 28.09.2011 DE 102011083651
(43) Veröffentlichungstag der Anmeldung: 06.08.2014
(73) Patentinhaber: KS Kolbenschmidt GmbH, 74172 Neckarsulm (DE)
(72) Erfinder: OTTLICZKY, Emmerich, 74670 Forchtenberg-Ernsbach (DE); RATZKY, Franz, 74834 Dallau (DE)
(74) Vertreter: Greif, Thomas
(86) Internationale Anmeldenummer: PCT/EP2012/068062
(87) Internationale Veröffentlichungsnummer: WO 2013/045289

(56) Entgegenhaltungen:
- DE-A1- 3 116 475
- DE-A1-102009 032 916
- JP-A- 58 101 250
- US-A1- 2006 037 471
- US-A1- 2011 146 074

## Beschreibung

Die Erfindung betrifft ein Verfahren zur Herstellung eines zumindest einen Kühlkanal aufweisenden Kolbens für eine Brennkraftmaschine, der aus zumindest einem Oberteil und einem Unterteil hergestellt wird, wobei der Kühlkanal des Kolbens mit Hilfe des Oberteils und des Unterteils gebildet wird und das Oberteil und das Unterteil jeweils mit Hilfe eines Schmiedeverfahrens hergestellt werden. Des Weiteren betrifft die Erfindung ein Verfahren zur Herstellung eines zumindest einen Kühlkanal aufweisenden Kolbens für eine Brennkraftmaschine, der aus zumindest einem Oberteil und einem Unterteil hergestellt wird, wobei der Kühlkanal des Kolbens mit Hilfe des Oberteils und des Unterteils gebildet wird und das Oberteil des Kolbens mit Hilfe eines Schmiedeverfahrens hergestellt wird. Des Weiteren betrifft die Erfindung ein Verfahren zur Herstellung eines zumindest einen Kühlkanal aufweisenden Kolbens für eine Brennkraftmaschine, der aus zumindest einem Oberteil und einem Unterteil hergestellt wird, wobei der Kühlkanal des Kolbens mit Hilfe des Oberteils und des Unterteils gebildet wird und das Unterteil des Kolbens mit Hilfe eines Schmiedeverfahrens hergestellt wird. Des Weiteren betrifft die Erfindung einen Kolben für eine Brennkraftmaschine, der zumindest einen Kühlkanal aufweist und aus zumindest einem Oberteil und einem Unterteil besteht, wobei der Kühlkanal des Kolbens mit Hilfe des Oberteils und des Unterteils gebildet ist.

Aus der DE 10 2006 022 413 B4 ist ein flüssigkeitsgekühlter Kolben für eine Brennkraftmaschine bekannt, der ein radial umlaufenden Ringträgerkühlkanal umfasst. Der Ringträgerkühlkanal besteht aus einem zu einem Kolbenboden beabstandeten Kühlkanal sowie einem zur Aufnahme eines Kolbenrings bestimmten Ringträger, wobei an den Ringträger innenseitig unmittelbar der Kühlkanal über seinen gesamten Umfang angeformt ist, wobei weiterhin der Kühlkanal zumindest eine Zustromöffnung und zumindest eine Abstromöffnung einschließt, über die ein Kühlmedium einströmen beziehungsweise ausströmen kann. Der Kühlkanal des spanlos hergestellten Ringträgerkühlkanals weist zur Versteifung eine geometrisch strukturierte Wandung auf, die geometrisch gleiche und wiederkehrende oder wechselnde nach innen weisende Strukturen einschließt, wobei der Kühlkanal an der Innenwand versetzt zueinander und sich in einer Querschnittsebene über die gesamte Innenwandung des Ringkanals erstreckende angeformte Rippen aufweist.

Die DE 31 16 475 A1 bezieht sich auf einen Kolben für eine Brennkraftmaschine mit einer Krone und einem offenen Kolbenende, die fest verbunden sind, wobei die Krone einen oberen Teil aus wärmeleitendem Metall und einen Ringträger aus einem Metall mit hoher Wärmeleitfähigkeit aufweist, und mit einer Kühlkammer in dem Kolben, durch die ein Kühlmittel hindurchführbar ist, wobei der obere Teil der Krone eine geringere Wärmeleitfähigkeit als der Ringträger aufweist und mit dem Ringträger verschweißt ist. Dieses Dokument offenbart einen gebauten Kolben, welcher mit Hilfe von Schrauben aus zwei Teilen zusammengefügt ist, wobei das Unterteil durch Gießen hergestellt wird.

Die DE 10 2009 032 916 A1 betrifft einen mehrteiligen Kolben für eine Brennkraftmaschine mit einem einen Kolbenboden aufweisenden Kolbenoberteil und einem Kolbenunterteil, wobei das Kolbenunterteil Nabenabstützungen und damit verbundene Kolbennaben aufweist, wobei das Kolbenoberteil und das Kolbenunterteil jeweils ein inneres und ein äußeres Stützelement aufweisen, die einen äußeren umlaufenden Kühlkanal begrenzen, wobei die inneren Stützelemente einen zu den Kolbennaben hin offenen Hohlraum begrenzen und der Hohlraum mit einem separaten Kühlölfänger versehen ist, der mindestens eine Kühlölöffnung aufweist. Die DE 10 2009 032 916 A1 betrifft ferner ein Verfahren zur Herstellung eines derartigen Kolbens. Dieses Dokument offenbart lediglich die Fertigung eines Kolbenoberteils sowie eines Kolbenunterteils im Schmiedeverfahren. Rippenartige Elemente in einem Kühlkanal werden hier nicht erwähnt.

Die US 2006/0037471 A1 offenbart einen Kolben für Dieselmotoren mit einem vollständig aus einem Stück Stahl gegossen Kolbenkörper und einem Kolbenkopf mit einer Verbrennungsmulde, einer Ringpartie und einem Kühlkanal sowie ein Paar Bolzenaugen und einen Kolbenmantel, die einstückig mit dem Kolbenkopf aus dem gleichen Stahlmaterial gegossen sind. Dieses Dokument betrifft einen einstückig gegossenen Kolben für Brennkraftmaschinen.

Die JP S58-101250 A betrifft einen Kolben für Brennkraftmaschinen, wobei der Kühlraum eine wellenartige Struktur aufweist. Durch das gerippte Aluminiummaterial soll die Kühlwirkung verbessert werden. Dieses Dokument offenbart Formen die die Herstellung eines Kolbens im Gießverfahren ermöglichen.

Die US 2011/146074 A1 betrifft ein Verfahren zum Konstruieren eines Kolbens, welches die folgenden Schritte umfasst:

Bereitstellen eines Kolbenkörpers mit einer Mittelachse, entlang der sich der Kolbenkörper innerhalb einer Zylinderbohrung hin- und her bewegt, wobei der Kolbenkörper einen oberen Kronenabschnitt mit einer oberen Verbrennungswand, gegen welche die Verbrennungskräfte in der Zylinderbohrung direkt wirken, und eine ringförmige obere Rippe aufweist, die von der oberen Verbrennungswand zu einem freien Ende hängt, wobei der Kolbenkörper ferner einen unteren Kronenabschnitt mit einer sich zu einem freien Ende erstreckenden ringförmigen unteren Rippe aufweist, die zum Eingriff mit der oberen Rippe ausgebildet ist, wobei die untere Krone ferner einen inneren Galerieboden, der radial innen gegenüber der unteren Rippe angeordnet ist, und ein Paar an Bolzenaugen aufweist, die allgemein von dem inneren Galerieboden hängen, wobei ein Raum zwischen den Bolzenaugen zum Aufnehmen eines kleinen Endes einer Pleuelstange vorgesehen ist, und der obere Kronenabschnitt und/oder der untere Kronenabschnitt einen Mittelstützpfosten aufweist, der sich entlang der Mittelachse zu einem freien Ende hin erstreckt; Initiieren einer Reibschweißverbindung zwischen dem freien Ende des Mittelstützpfostens und einer entsprechenden Fläche, die dem freien Ende des Mittelstützpfostens gegenüberliegt und Bilden eine Reibschweißverbindung zwischen dem freien Ende der oberen Rippe und dem freien Ende der unteren Rippe, nachdem die Reibschweißverbindung bei dem freien Ende der Mittelstützung initiiert wurde, und Komplettieren der Reibschweißverbindung zwischen dem freien Ende des Mittelstützelements und der entsprechende Fläche, die dem freien Ende des Mittelstützpfostens gegenüberliegt. Dieses Dokument offenbart einen Kolben welcher durch Fügen von einem Kolbenoberteil mit einem Kolbenunterteil durch Reibschweißen entsteht. Die Fügestellen sind vor dem Fügen als umlaufende Rippen ausgebildet, welche während des Fügeprozesses in die Fügeverbindung aufgehen. Rippen, die nach dem Fügevorgang in den Kühlkanal hineinragen, werden hier somit nicht offenbart.

Nachteilig bei einem solchen aus dem Stand der Technik bekannten Kolben für eine Brennkraftmaschine ist, dass der Ringträgerkühlkanal zur Versteifung aufwendig und somit kostenintensiv herzustellen ist. Dadurch ergeben sich auch erhöhte Produktionskosten für einen Kolben, der einen Ringträgerkühlkanal geometrisch strukturierter Wandung aufweist.

Aufgabe der Erfindung ist es daher, eine Möglichkeit zu schaffen, mittels der ein Kolben einfach und kostengünstig herstellbar ist und mittels der die oben genannten Nachteile vermieden werden.

Die Aufgabe wird dadurch gelöst, dass während des Schmiedens des Oberteils in einem Bereich des zu schmiedenden Kühlkanals des Oberteils zusätzlich zumindest ein rippenartiges Element, insbesondere zumindest eine Rippe, mitgeschmiedet wird und/oder während des Schmiedens des Unterteils in einem Bereich des zu schmiedenden Kühlkanals des Unterteils zusätzlich zumindest ein rippenartiges Element, insbesondere zumindest eine Rippe, mitgeschmiedet wird. Eine fertiggeschmiedete Kühlkanalform entsteht.

Die Aufgabe wird alternativ dadurch gelöst, dass während des Schmiedens des Oberteils in einem Bereich des zu schmiedenden Kühlkanals des Oberteils zusätzlich zumindest ein rippenartiges Element, insbesondere zumindest eine Rippe, mitgeschmiedet wird.

Ferner wird die Aufgabe alternativ dadurch gelöst, dass während des Schmiedens des Unterteils in einem Bereich des zu schmiedenden Kühlkanals des Unterteils zusätzlich zumindest ein rippenartiges Element, insbesondere zumindest eine Rippe, mitgeschmiedet wird.

Vorteilhaft ist, dass eine kostengünstige Herstellung des Kolbens mittels der Erfindung möglich ist, indem rippenartige Elemente in Form von Versteifungen oder Verstärkungsrippen direkt während des Schmiedevorgangs des Oberteils und/oder des Unterteils in den Bereich des Kühlkanals mit eingeschmiedet werden. Es entfällt folglich eine Bearbeitung des Kühlkanalhohlraumes nach dem Schmieden des Oberteils und/oder des Unterteils des Kolbens. Aufgrund des Schmiedens sowohl der Versteifungen im Bereich des Kühlkanals als auch gleichzeitig des Schmiedens des zugehörigen Oberteils und/oder des zugehörigen Unterteils ist ein sogenanntes Netshape-Forging möglich. Daneben ist es mit Hilfe der Erfindung möglich, die Kühlung des Kolbens während des Betriebs in einer Brennkraftmaschine zu optimieren. Durch die vergrößerte Oberfläche aufgrund der Form der rippenartigen Elemente in Form von Kühlrippen in dem Kühlkanal ist eine verbesserte Kühleffizienz in dem Kolben möglich. Ferner wird durch die rippenartigen Elemente die Strömung des Kühlmittels in dem Kolben und somit dessen Transport verbessert, so dass es dadurch auch zu einer verbesserten Kühleffizienz in dem Kolben kommt. Vorteilhaft ist weiterhin, dass es durch die rippenartigen Elemente im Bereich des Kühlkanals des Kolbens zu einer Versteifung des Kühlkanals, insbesondere einer Versteifung des Kühlkanalscheitels, kommt. Dadurch lassen sich Kolbendeformationen während des Betriebs des Kolbens in einer Brennkraftmaschine reduzieren. Auch wird durch die Versteifung in Form von rippenartigen Elementen im Bereich des Kühlkanals eine verbesserte Spannungssituation im Bereich des Kühlkanalscheitels des Kolbenoberteils geschaffen. Der Kühlkanalscheitel ist dabei der Bereich des Kolbens, der ein Maximum im Kühlkanal bezogen auf die Kolbenhubachse in Richtung Brennraum bildet, wobei der Kühlkanalscheitel in der Regel der höchste Punkt im Kühlkanal ist und somit im Bereich des Oberteils liegt. Des Weiteren weist der hergestellte Kolben gemäß der Erfindung eine hohe Zünddruckbelastbarkeit bei gleichzeitig guter Kühlung für Kolben mit und ohne Abstützung des äußeren Ringfelds auf. Daneben lassen sich Kolben mit niedriger Kompressionshöhe herstellen.

Das rippenartige Element wird bevorzugt senkrecht zur Umlaufrichtung des Kühlkanals geschmiedet. Indem das rippenartige Element senkrecht zur Umlaufrichtung des Kühlkanals des Kolbens in den Kühlkanal mit eingeschmiedet wird, ist es möglich, dass das beispielsweise mittels einer Eintrittsöffnung in den Kühlkanal eintretende Kühlmittel, beispielsweise Kühlöl, strömungstechnisch während des Betriebs des Kolbens in einer Brennkraftmaschine optimal aufgrund des senkrechten Einschmiedens beschleunigt oder verzögert wird bis es wieder beispielsweise mittels einer Ausströmöffnung aus dem Kühlkanal austritt. Durch das Beschleunigen oder Verzögern ist eine verbesserte Kühlung des Kolbens während des Betriebs möglich. Wenn der Kühlkanal mehrere rippenartige Elemente aufweist, die senkrecht zur Umlaufrichtung des Kühlkanals in dem zugehörigen Oberteil und/oder in dem zugehörigen Unterteil mitgeschmiedet worden sind, ergibt sich bezogen auf den Kolbenmittelpunkt eine Anordnung in Sternform.

Das Oberteil und das Unterteil werden bevorzugt mittels eines Fügeverfahrens, insbesondere mittels Reibschweißen, zur Herstellung des Kolbens miteinander verbunden. Dadurch ist es möglich, dass der Bereich unterhalb einer Brennraummulde des Kolbens und der Bereich, in dem sich die späteren Ringnuten befinden, optimal und einfach gefügt werden. Der Kolben lässt sich somit einfach und kostengünstig herstellen.

Beim Schmieden des Oberteils und/oder des Unterteils werden bevorzugt zumindest zwei Schweißabstützungen, insbesondere eine Außenabstützung und eine Zentralabstützung, mitgeschmiedet. Eine Außenabstützung ist der Bereich, der sich im Bereich der späteren Ringnuten befindet und somit die Außenseiten des Kolbens, das heißt die Außenseite des Oberteils und des Unterteils, miteinander verbindet. Die Außenabstützung ist bevorzugt radial mit einem konstanten Abstand vollständig um die Kolbenhubachse des Oberteils und des Unterteils umlaufend. Eine Zentralabstützung ist ein mittlerer Bereich des Kolbens um die Kolbenhubachse herum, in dessen Bereich das Kolbenoberteil mit dem Kolbenunterteil auch gefügt werden. Die Zentralabstützung ist auch unter dem Begriff zentrale Anbindung des Kolbens bekannt.

Das Oberteil und das Unterteil liegen somit im Bereich der Außenabstützung und im Bereich der Zentralabstützung aufeinander auf und werden bevorzugt mittels Reibschweißen im Bereich der Außenabstützung und im Bereich der Zentralabstützung miteinander gleichzeitig verbunden. Im jeweiligen Bereich der Schweißabstützung bildet sich jeweils eine Schweißebene aus, wobei die Schweißebene der Außenabstützung und die Schweißebene der Zentralabstützung in der gleichen Schweißebene liegen können oder in einer unterschiedlichen Schweißebene liegen können. Ferner ist es möglich, dass die jeweilige Schweißebene der Außenabstützung und der Zentralabstützung gekrümmt und/oder flach ausgeführt wird, wenn der Kolben hergestellt wird. Insbesondere mittels der Zentralabstützung ist es möglich, die Schweißebenengeometrie zu variieren, so dass die spannungskritischen Reibschweißwülste in unkritische Spannungsebenen des später hergestellten Kolbens positioniert werden.

Die Schweißebene ist dabei nicht auf eine ebene Fläche begrenzt, sondern bezieht sich auf eine Ebene, die einen beliebigen Verlauf haben kann. Mehrere Schweißebenen lassen sich zu einer einzigen, gemeinsamen Schweißebene zusammenfassen, wobei der Verlauf der einzigen, gemeinsamen Schweißebene sich aus dem Verlauf der mehreren Schweißebenen zusammensetzt.

Zwischen Zentralabstützung und Außenabstützung bildet sich bevorzugt nach dem Verbinden von Oberteil und Unterteil der Kühlkanal des Kolbens aus.

Der erfindungsgemäße Kolben ist nach einem Verfahren gemäß einem der Ansprüche 1 bis 6 hergestellt worden.

In einer vorteilhaften Ausgestaltung besteht der Kolben aus einem Stahlwerkstoff. Alternativ ist es möglich, dass der Kolben aus einem Leichtmetallwerkstoff, beispielsweise Aluminium, einer Aluminiumlegierung, einer Magnesiumlegierung oder dergleichen, besteht. Es ist ferner möglich, dass der Kolben, der aus einem Oberteil und einem Unterteil besteht, aus unterschiedlichen Werkstoffen besteht, indem beispielsweise das Oberteil aus einem Stahlwerkstoff und das Unterteil aus einem Leichtmetallwerkstoff besteht (oder umgekehrt).

In einer weiteren vorteilhaften Ausgestaltung weist der Kolben zumindest ein rippenartiges Element, insbesondere zumindest eine Rippe, in dem Kühlkanal auf.

Wenn der Kühlkanal des Kolbens mehrere rippenartige Elemente aufweist, ist es möglich, dass diese geometrisch gleich in dem Kolben gestaltet sind, das heißt wiederkehrende geometrische Strukturen und/oder Formgebungen aufweisen. Alternativ oder ergänzend ist es möglich, dass die rippenartigen Elemente in dem Kühlkanal wechselnde Strukturen und/oder Formgebungen aufweisen.

Eine geometrisch gleiche Struktur ist beispielsweise gegeben, wenn der Abstand zwischen den rippenartigen Elementen in dem Kühlkanal gleich bezogen auf den radialen Umlauf in dem Kühlkanal ist. Eine Wechselstruktur ist beispielsweise gegeben, wenn die Anordnung der rippenartigen Elemente in dem Kühlkanal mit einem unterschiedlichen Abstand zueinander in dem radialen Umlauf des Kühlkanals angeordnet sind, so dass sich Bereiche mit einer höheren Dichte an rippenartigen Elementen und Bereiche mit einer geringeren Dichte an rippenartigen Elementen ergeben. Eine wiederkehrende geometrische Formgebung ist beispielsweise in dem Kolben dann ausgebildet, wenn die rippenartigen Elemente alle die gleiche Form aufweisen. Eine wechselnde Formgebung ist beispielsweise dann in dem Kolben ausgebildet, wenn die rippenartigen Elemente jeweils eine unterschiedliche Form aufweisen.

Ferner ist es möglich, dass die rippenartigen Elemente aus dem Kühlkanal herausweisen, so dass sich eine Art Hügel in dem Kühlkanal jeweils ergibt, oder alternativ in den Kühlkanal hineinreichen, so dass sich Täler in dem Kühlkanal ergeben. Des Weiteren ist es alternativ möglich, dass einige rippenartige Elemente in dem Kühlkanal in den Kühlkanal hineinreichen und andere rippenartige Elemente aus dem Kühlkanal hinausragen. Die Hügel und Täler können dabei jeweils eine gleiche oder wechselnde geometrische Struktur und/oder Formgebung gemäß vorhergehender Beschreibung aufweisen.

Das rippenartige Element ist bevorzugt als Rippe ausgebildet, wobei alternativ zur Rippe auch ein Druckbereich, eine Delle, eine Auswölbung, eine Sicke, eine Wulst, eine Ribbelung oder dergleichen möglich ist.

In einer weiteren vorteilhaften Ausgestaltung ist das rippenartige Element quer zur Umlaufrichtung des Kühlkanals angeordnet.

In einer weiteren vorteilhaften Ausgestaltung weist der Kolben zumindest zwei Schweißabstützungen, insbesondere eine Außenabstützung und eine Zentralabstützung, auf, die jeweils zumindest eine Schweißebene aufweisen, wobei die Schweißebene des Oberteils und des Unterteils in dem Bereich der Außenabstützung und in dem Bereich der Zentralabstützung in der gleichen Schweißebene angeordnet sind oder in unterschiedlichen Schweißebenen angeordnet sind.

In einer weiteren vorteilhaften Ausgestaltung ist die Schweißebene in dem Bereich der Außenabstützung und/oder in dem Bereich der Zentralabstützung bei dem Kolben gekrümmt und/oder flach ausgeführt.

In den Figuren sind bevorzugte Ausführungsformen gemäß der Erfindung dargestellt. Es zeigen
- Figur 1:: einen erfindungsgemäßen Kolben im Schnitt,
- Figur 2:: den erfindungsgemäßen Kolben in einem um 90° gedrehten Schnitt,
- Figur 3:: den erfindungsgemäßen Kolben im Schnitt B-B,
- Figur 4:: einen weiteren Kolben im Schnitt,
- Figur 5:: den weiteren Kolben in einem um 90° gedrehten Schnitt,
- Figur 6:: einen weiteren Kolben im Schnitt und
- Figur 7:: den weiteren Kolben in einem um 90° gedrehten Schnitt.

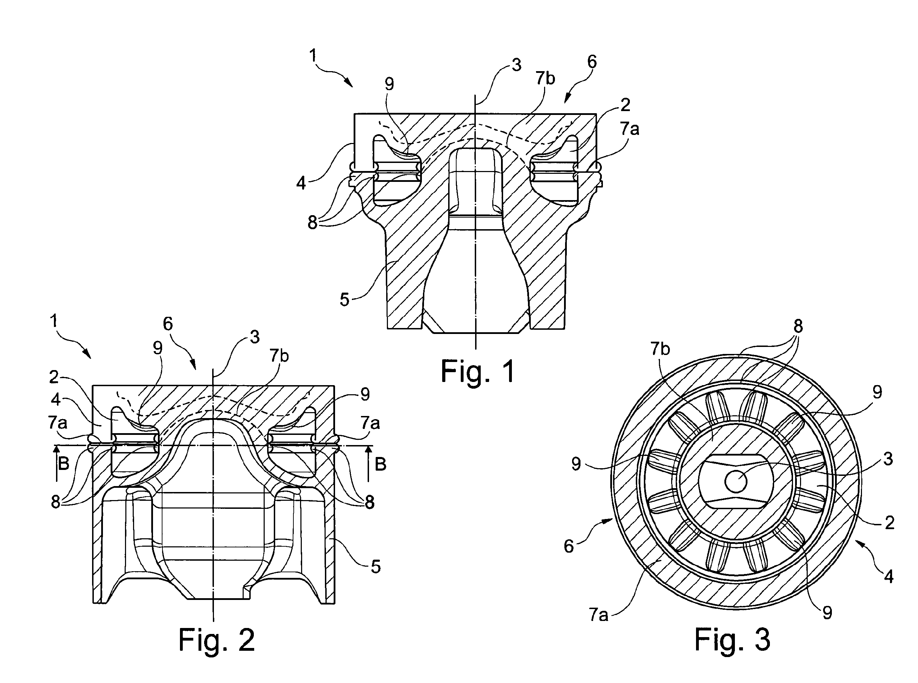

In den Figuren 1 bis 7 sind verschiedene Ausführungsformen von unbearbeiteten Kolben 1 für eine Brennkraftmaschine dargestellt. Gleiche Bauteile sind in den Figuren mit gleichen Bezugsziffern versehen und unterschiedliche Bauteile sind mit unterschiedlichen Bezugsziffern versehen.

Zunächst werden die übereinstimmenden Merkmale des jeweiligen Kolbens 1 gemäß den Figuren 1 bis 7 dargestellt.

In den Ausführungsbeispielen gemäß den Figuren 1 bis 7 besteht der jeweilige Kolben 1 jeweils aus einem Stahlwerkstoff.

Die in den Figuren 1 bis 7 dargestellten Kolben 1 für eine Brennkraftmaschine weisen jeweils im Ausführungsbeispiel einen einzigen Kühlkanal 2 auf. Gemäß den Figuren 1 bis 7 ist der Kühlkanal 2 radial mit konstantem Abstand um die Kolbenhubachse 3 des jeweiligen Kolbens 1 vollständig umlaufend. Ferner besteht der jeweilige Kolben 1 aus einem Oberteil 4 und einem Unterteil 5. Der Kühlkanal 2 des Kolbens 1 wird mit Hilfe des Oberteils 4 und des Unterteils 5 gebildet, in dem sich der Kühlkanal 2 zwischen Oberteil 4 und Unterteil 5 gemäß den Figuren 1 bis 7 ausbildet.

Das Oberteil 4 und das Unterteil 5 sind jeweils mit Hilfe eines Schmiedeverfahrens hergestellt worden.

Ferner weist der jeweilige Kolben 1 gemäß den Figuren 1 bis 7 zumindest eine nicht dargestellte Zulauföffnung für Kühlmittel, beispielsweise Motoröl, und zumindest eine nicht dargestellte Ablauföffnung für das Kühlmittel auf. Mittels der Eintrittsöffnung ist es möglich, Kühlmittel, beispielsweise aus der Brennkraftmaschine, in den Kühlkanal 2 einzuleiten, so dass dieses den Kühlkanal 2 durchströmt und anschließend aus der Austrittsöffnung nach dem Kühlen des Kolbens 1 wieder austritt, wodurch der Kolben 1 gekühlt wird.

Ferner weist der jeweilige Kolben 1 gemäß den Figuren 1 bis 7 im Bereich des Unterteils 5 Kolbenschäfte auf.

Des Weiteren weist der jeweilige Kolben 1 gemäß den Figuren 1 bis 7 zwei Schweißabstützungen auf, die jeweils eine Schweißebene aufweisen. In den Figuren 1 bis 7 weist der jeweilige Kolben 1 jeweils eine Schweißabstützung in Form einer Außenabstützung 7a und eine Schweißabstützung in Form einer Zentralabstützung 7b auf. Die Außenabstützung 7a befindet sich gemäß den Figuren 1 bis 7 im Bereich des späteren Ringfeldes des Kolbens 1 und die Zentralabstützung 7b befindet sich unterhalb einer gestrichelt angedeuteten Brennraummulde 6 im Bereich um die Kolbenhubachse 3 herum. Die Außenabstützung 7a ist vollständig mit konstantem Abstand um die Kolbenhubachse 3 radial herumlaufend, so dass sowohl das Oberteil 4 als auch das Unterteil 5 jeweils eine Seite der vollständig umlaufenden Außenabstützung 7a aufweisen. Die beiden Seiten korrespondieren zueinander, so dass das Oberteil 4 auf das Unterteil 5 zum Verbinden auf die jeweilige Seite aufgelegt wird. Die Zentralabstützung 7b ist als Fläche um die Kolbenhubachse 3 ausgebildet, wobei das Oberteil 4 und das Unterteil 5 jeweils eine Seite der Fläche bilden. Beim aufeinander Auflegen der Seiten des Oberteils 4 und des Unterteils 5 im Bereich der Außenabstützung 7a werden zum Verbinden auch die korrespondierenden Seiten des Oberteils 4 und des Unterteils 5 im Bereich der Zentralabstützung 7b aufeinander aufgelegt.

Das Oberteil 4 und das Unterteil 5 des jeweiligen Kolbens 1 sind miteinander mittels eines Fügeverfahrens, im Ausführungsbeispiel mittels eines Reibschweißverfahrens, an den beiden Schweißabstützungen, dass heißt der Außenabstützung 7a und der Zentralabstützung 7b des jeweiligen Kolbens 1, im Bereich der zugehörigen Schweißebene verbunden, wobei sich im Bereich der Außenabstützung 7a und der Zentralabstützung 7b jeweils eine Reibschweißnaht ausbildet. Der jeweilige Kolben 1 weist durch die geometrische Ausgestaltung der Schweißabstützung gemäß den Figuren 1 bis 7 jeweils nur drei Reibschweißwülste 8 auf.

Nachfolgend werden weitere Merkmale der Kolben 1 gemäß den Figuren 1 bis 7 beschrieben, in denen die Kolben 1 sich jeweils unterscheiden.

Der Kolben 1 gemäß den Figuren 1 bis 3 weist im Bereich des Oberteils 4 des Kolbens 1 mehrere rippenartige Elemente in dem Kühlkanal 2 auf. Im Ausführungsbeispiel gemäß den Figuren 1 bis 3 sind die rippenartigen Elemente als eine Rippe 9 ausgebildet, wobei das Oberteil 4 zwölf Rippen 9 aufweist. Gemäß der Figur 3 sind die Rippen 9 dabei quer zur Umlaufrichtung des Kühlkanals 2 mit konstantem Abstand zu Kolbenhubachse 3 angeordnet, so dass sich bezogen auf die Kolbenhubachse 3 des Kolbens 1 eine Anordnung der Rippen 9 in sternform ergibt. Die Rippen 9 sind mit gleichem Abstand zueinander angeordnet, so dass diese eine gleiche geometrische Struktur bilden. Gemäß den Figuren 1 und 2 sind die Rippen 9 in dem Oberteil 4 des Kolbens 1 jeweils in Richtung Kühlkanal 2 gewölbt, so dass diese in Form von gebildeten Höhen aus dem Oberteil 4 etwas herausstehen und eine Art Ribbelung in dem Kühlkanal 2 erzeugen. Die Rippen 9 weisen dabei auch jeweils eine gleiche Formgebung auf.

Gemäß den Figuren 1 und 2 sind die Schweißebene des Oberteils 4 und die Schweißebene des Unterteils 5 des Kolbens 1 in dem Bereich der Außenabstützung 7a und in dem Bereich der Zentralabstützung 7b an der jeweiligen Auflagefläche in der gleichen Schweißebene angeordnet, so dass sich aus beiden eine einzige, gemeinsame Schweißebene ausbildet. Dabei ist die Schweißebene im Bereich der Außenabstützung 7a flach ausgeführt und die Schweißebene im Bereich der Zentralabstützung 7b in dem Kolben 1 gekrümmt ausgeführt.

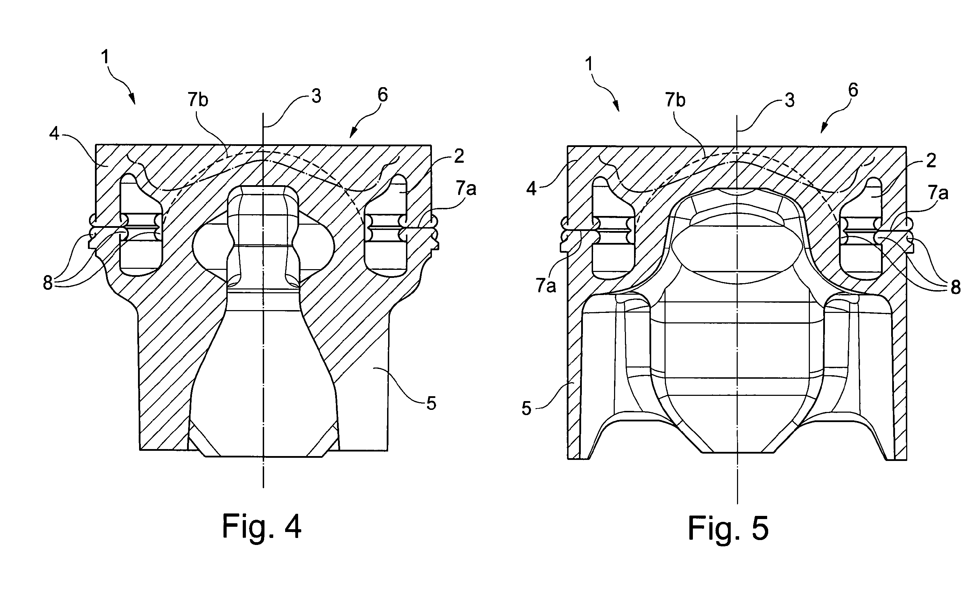

In den Figuren 4 und 5 ist ein alternativer Kolben 1 gemäß der Erfindung dargestellt, wobei der Kolben 1 gemäß den Figuren 4 und 5 kein rippenartiges Element aufweist. Die Schweißebene des Oberteils 4 und des Unterteils 5 sind gemäß den Figuren 4 und 5 in dem Bereich der Außenabstützung 7a und in dem Bereich der Zentralabstützung 7b an der jeweiligen Auflagefläche in der gleichen Schweißebene angeordnet. Ferner ist gemäß den Figuren 4 und 5 die Schweißebene im Bereich der Außenabstützung 7a flach ausgeführt und die Schweißebene im Bereich der Zentralabstützung 7b bei dem Kolben 1 gekrümmt ausgeführt.

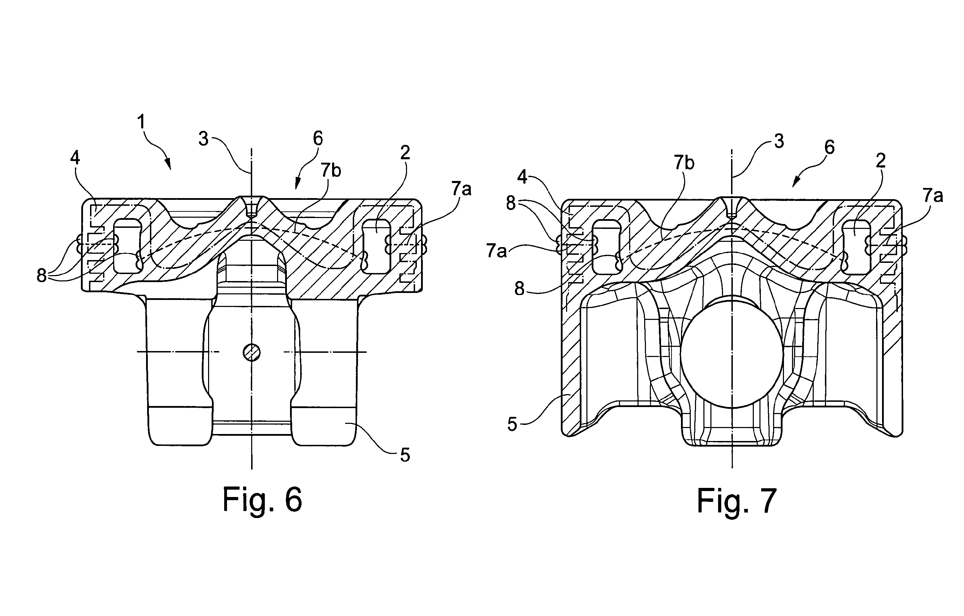

In den Figuren 6 und 7 ist ein weiterer alternativer Kolben 1 gemäß der Erfindung dargestellt, wobei der Kolben 1 gemäß den Figuren 6 und 7 kein rippenartiges Element aufweist. Die Schweißebenen des Oberteils 4 und des Unterteils 5 sind in dem Bereich der Außenabstützung 7a und in dem Bereich der Zentralabstützung 7b an der jeweiligen Auflagefläche in unterschiedlichen Schweißebenen angeordnet, da sich ein Sprung zwischen Schweißebene der Außenabstützung 7a und der Schweißebene der Zentralabstützung 7b in dem Bereich des Kühlkanals 2 ergibt. Aufgrund des Sprungs sind somit die beiden Schweißebenen zueinander versetzt. Gemäß Figuren 6 und 7 ist die Schweißebene in dem Bereich der Außenabstützung 7a flach ausgeführt und die Schweißebene in dem Bereich der Zentralabstützung 7b bei dem Kolben 1 gekrümmt ausgeführt. Ferner ist in den Figuren 6 und 7 mittels der gestrichelten Linie die Kontur des fertig hergestellten Kolbens 1 angedeutet.

Nachfolgend wird ein Verfahren zur Herstellung eines einen Kühlkanal 2 aufweisenden Kolbens 1 für eine Brennkraftmaschine beschrieben. Dabei wird beispielhaft der in den Figuren 1 bis 3 dargestellte Kolben 1 hergestellt. Der Kolben 1 gemäß den Figuren 1 bis 3 wird im Ausführungsbeispiel aus einem Oberteil 4 und einem Unterteil 5 hergestellt. Dabei wird der Kühlkanal 2 des Kolbens 1 mit Hilfe des Oberteils 4 und des Unterteils 5 gemäß den Figuren 1 und 2 gebildet. Im Ausführungsbeispiel werden das Oberteil 4 und das Unterteil 5 des Kolbens 1 jeweils mit Hilfe eines Schmiedeverfahrens hergestellt.

Während des Schmiedens des Oberteils 4 werden in einem Bereich des zu schmiedenden Kühlkanals 2 des Oberteils 4 gemäß Figur 3 zusätzlich mehrere Rippen 9 gleichzeitig mitgeschmiedet. Dabei werden die Rippen 9 senkrecht zur Umlaufrichtung des Kühlkanals 2 geschmiedet, so dass sich eine Anordnung der Rippen 9 gemäß Figur 3 in dem Kühlkanal 2 des Oberteils 4 nach dem Schmieden ausbildet. In das Unterteil 5 werden keine Rippen 9 mit eingeschmiedet, so dass das Unterteil 5 keine Rippen 9 aufweist.

Beim Schmieden des Oberteils 4 und des Unterteils 5 werden zusätzlich Schweißabstützungen mit in das jeweilige Oberteil 4 und das jeweilige Unterteil 5 mit eingeschmiedet. Im Ausführungsbeispiel gemäß Figuren 1 bis 3 werden während des Schmiedens von Oberteil 4 und Unterteil 5 jeweils eine Außenabstützung 7a als Schweißabstützung und jeweils eine Zentralabstützung 7b als Schweißabstützung gleichzeitig mitgeschmiedet.

Das unbearbeitete und geschmiedete Oberteil 4 und das unbearbeitete und geschmiedete Unterteil 5 werden anschließend mittels eines Fügeverfahrens, im Ausführungsbeispiel mittels Reibschweißen, zur Herstellung des Kolbens 1 an den beiden Schweißabstützungen miteinander verbunden, wobei dazu vor dem Reibschweißen die korrespondierenden Seiten der jeweiligen Schweißabstützung des Oberteils 4 und des Unterteils 5 passend aufeinander gelegt werden.

Zum Verbinden wird das Oberteil 4 und das Unterteil 5 an beiden Schweißabstützungen des Oberteils 4 und des Unterteils 5 reibgeschweißt. Die beiden Schweißabstützungen gemäß den Figuren 1 und 2 sind im Ausführungsbeispiel die Außenabstützung 7a und die Zentralabstützung 7b. Während des Reibschweißens an der Außenabstützung 7a und an der Zentralabstützung 7b bilden sich nur drei Reibschweißwülste 8 am Kolben 1 aus, so dass der hergestellte Kolben 1 nur drei Reibschweißwülste 8 gemäß den Figuren 1 bis 3 aufweist.

Gemäß Figuren 1 und 2 ist eine Reibschweißwulst 8 in dem Kühlkanal 2 umlaufend im dem Randbereich der Zentralabstützung 7b, eine Reibschweißwulst 8 in dem Kühlkanal 2 umlaufend in dem Randbereich der Außenabstützung 7a und eine Reibschweißwulst 8 an der Außenseite des Kolbens 1 umlaufend in dem Randbereich der Außenabstützung 7a ausgebildet.

Das Reibschweißen selbst findet dabei in einer einzigen Schweißebene in Form einer Reibschweißebene statt. Dazu weisen das Oberteil 4 und das Unterteil 5 in dem Bereich der Außenabstützung 7a und im Bereich der Zentralabstützung 7b jeweils eine Schweißebene auf, wobei gemäß den Figuren 1 bis 3 und vorhergehenden Ausführungen das Oberteil 4 und das Unterteil 5 in dem Bereich der Außenabstützung 7a und in dem Bereich der Zentralabstützung 7b in einer gleichen Schweißebene reibgeschweißt werden.

Während der Herstellung des Oberteils 4 und des Unterteils 5 mittels des Schmiedeverfahrens wurden die jeweiligen Schweißebenen in dem Bereich der Außenabstützung 7a und in dem Bereich der Zentralabstützung 7b jeweils mit einer unterschiedlichen geometrischen Ausgestaltung ausgeführt. Gemäß Figuren 1 und 2 wurde die Schweißebene in dem Bereich der Außenabstützung 7a bei der Herstellung des Oberteils 4 und des Unterteils 5 flach ausgeführt und die Schweißebene in dem Bereich der Zentralabstützung 7b bei der Herstellung des Oberteils 4 und des Unterteils 5 gekrümmt ausgeführt.

Nach dem Reibschweißen von Oberteil 4 und Unterteil 5 zu dem in den Figuren 1 bis 3 dargestellten Kolbens 1 wird dieser beispielsweise in dem Bereich der Außenabstützung 7a im Außenbereich des Kolbens 1 weiter bearbeitet, so dass sich beispielsweise drei Ringnuten in dem Bereich um die Außenabstützung 7a herum ausbilden. Bei dieser Bearbeitung wird beispielsweise auch die den Kolben 1 umlaufende Reibschweißwulst 8 an der Außenseite des Kolbens 1 entfernt. Ferner ist es beispielsweise möglich, nach dem Reibschweißen eine Bolzenbohrung in den Bereich des Kolbenunterteils 5 einzubringen und die Kolbenschäfte des Kolbenunterteils 5 weiter fertig zu bearbeiten. Ferner ist es möglich, eine Brennraummulde 6 gemäß der gestrichelt angedeuteten Brennraummulde 6 gemäß Figuren 1 und 2 in den Kolben 1 einzubringen.

Der fertig hergestellte Kolben 1 wird dann in einer Brennkraftmaschine betrieben und mittels Kühmittel in seinem Kühlkanal 2 während des Betriebs gekühlt.

Der Kolben 1 gemäß den Figuren 4 und 5 und der Kolben 1 gemäß den Figuren 6 und 7 wird jeweils entsprechend hergestellt. Dabei wird während des Schmiedens von Oberteil 4 und Unterteil 5 des jeweiligen Kolbens 1 gemäß den Figuren 4 bis 7 jeweils keine Rippe 9 mitgeschmiedet. Ferner weist die Schweißebene des Kolbens 1 gemäß den Figuren 6 und 7 einen Sprung gemäß der vorhergehenden Beschreibung auf, so dass in unterschiedlichen Schweißebenen bei der Herstellung des Kolbens 1 gemäß den Figuren 6 und 7 reibgeschweißt wird. Der Kolben 1 gemäß den Figuren 4 und 5 wird in einer gleichen Schweißebene geschweißt. Daneben ist es möglich, eine Brennraummulde 6 gemäß der gestrichelt angedeuteten Brennraummulde 6 gemäß den Figuren 4 bis 7 in den jeweiligen Kolben 1 einzubringen.

Die Erfindung betrifft ein Verfahren zur Herstellung und einen nach diesem Verfahren hergestellten Stahlkolben, der aus zwei Teilen (Ober- und Unterteil) gefügt wird. Vorzugsweise wird das Oberteil, aber auch beide Teile, in einem Schmiedeverfahren hergestellt.

Das Oberteil und das Unterteil werden derart in einem Schmiedeverfahren hergestellt, dass sie einander zugewandte Fügeflächen aufweisen, die mittels eines geeigneten Fügeverfahrens, insbesondere mittels Reibschweißen, miteinander verbunden werden. Dazu weisen das Oberteil und/oder das Unterteil eine radial umlaufende Ausnehmung auf, die nach dem zusammenfügen einen Kühlkanal bilden. Ein solcher Kühlkanal wird mit einem Zulauf und einem Ablauf versehen, so dass in an sich bekannter Weise ein Kühlmedium, insbesondere Motoröl, in dem radial umlaufenden und geschlossenen Kühlkanal zirkulieren kann, um die umgebenden Bereiche, insbesondere den sogenannten Kolbenboden, zu kühlen. Um die Kühlwirkung zu verbessern, ist schon im Stand der Technik bekannt geworden, in Richtung des nach oben, das heißt in Richtung der Verbrennungskammer, weisenden Scheitelpunkt des Kühlkanales mehrere nebeneinander liegende Bohrungen einzubringen, in die das Kühlmedium eindringen und damit die Kühlwirkung in diesem Bereich durch eine vergrößerte Oberfläche zu verbessern. Die Verbesserung der Kühlwirkung funktioniert zwar zufriedenstellend. Die Eindringung der Vielzahl von Bohrungen hat jedoch den Nachteil, dass zusätzliche Fertigungsschritte erforderlich sind und in dem stark beanspruchten Kolbenboden eine Schwächung durch diese Bohrungen stattfindet.

Der Erfindung liegt daher die Aufgabe zu Grunde, einen gattungsgemäßen Kolben dahingehend zu verbessern, dass gleichzeitig bei verbesserter Kühlwirkung die Stabilität des Kolbenbodens nicht nur beibehalten, sondern ebenfalls erhöht wird.

Diese Aufgabe ist dadurch gelöst, dass das Oberteil im Schmiedeverfahren hergestellt wird und bei der Formgebung in der Ausnehmung eine Vielzahl von rippenartigen Elementen eingebracht wird. Diese rippenartigen Elemente erstrecken sich sternförmig ausgehend von der Kolbenhubachse nach außen, und zwar unterhalb des Scheitelpunktes des radial umlaufenden Kühlkanales. Diese Rippen vergrößern die Oberfläche des Kühlkanales, da bei umlaufender Betrachtung der Oberfläche des Kühlkanales eine Wellenform entsteht. Hierbei muss es sich nicht zwangsweise um eine Wellenform handeln, sondern es wechselt sich, insbesondere gleichförmige, Erhöhungen und Vertiefungen ab. Der Übergang von einer Erhöhung zu einer Vertiefung und umgekehrt ist in vorteilhafter Weise gerundet, muss es aber nicht sein. Die vorstehend beschriebene Formgebung der Ausnehmung in dem Oberteil kann alternativ oder ergänzend auch in der radial umlaufenden Ausnehmung des Unterteiles vorhanden sein. Das heißt, die Formgebung ist entweder nur der Ausnehmung des Oberteiles oder nur in der Ausnehmung des Unterteiles oder in beiden Ausnehmungen, die radial umlaufenden sind, vorhanden.

Nach dem diese Art von Formgebung der radial umlaufenden Ausnehmungen in dem Oberteil und/oder dem Unterteil zur Bildung von rippenartigen Elementen, insbesondere Kühlrippen, hergestellt worden sind, werden die beiden Teile zusammengefügt.

Alternativ zu der vorstehend geschilderten Ausgestaltung kann die gestellte Aufgabe wie folgt gelöst werden:

Mittels Fügeverfahren, insbesondere Reibschweißen, wird eine umlaufende Ausabstützung des Kolbenoberteiles und des Kolbenunterteiles im Ringfeldbereich erzeugt, wobei der Ringfeldbereich nach dem Zusammenfügen später bearbeitet wird. Weiterhin ist eine zentrale Verbindung des Kolbenunterteiles mit dem Kolbenoberteil vorhanden. Hierbei kann es sich beispielsweise um eine kraftschlüssige oder formschlüssige oder auch eine materialschlüssige Verbindung handeln. Durch Vorformen des Oberteiles und/oder des Unterteiles entsteht zwischen der zentralen Anbindung des Kolbenunterteiles (insbesondere durch die zentrale Abstützung) und der umlaufenden Ausabstützung ein umlaufender Kühlhohlraum. Reibschweißwulste entstehen sowohl innen und auch außen im Bereich der Fügeebene (Schweißebene) der Außenabstützung sowie eine Reibschweißwulst an der Außenseite der Schweißebene der zentralen Abstützung entsteht. Dies sind insgesamt drei Reibschweißwülste. Dies hat den Vorteil, dass bekannte Lösungen oft vier oder sechs Reibschweißwulste aufweisen, so dass diese Anzahl reduziert wird. Die Schweißebenen der Außenabstützung und der Zentralabstützung können in einer Ebene oder versetzt sein. Die Schweißebene selbst, insbesondere die Ebene der Zentralabstützung, kann sowohl eben als auch gekrümmt oder in Kombination von eben und gekrümmt ausgeführt werden.

In vorteilhafter Weise entstehen nur Reibschweißwulste am Außendurchmesser und im Kühlkanal. Die Zentralabstützung erlaubt durch Variation der Schweißebenen Geometrie die Positionierung der spannungskritischen Reibschweißwulste in unkritischen Spannungseben. Dadurch lassen sich in besonders vorteilhafter Weise Stahlkolben, gegebenenfalls aber auch Kolben aus einem Leichtmetallwerkstoff, mit besonders niedriger Kompressionshöhe herstellen, wobei gleichzeitig hohe Zündruckbelastbarkeit bei ebenfalls gleichzeitig guter Kühlung durch günstige Positionierung der Reibschweißebene realisiert werden kann. Ebenso ist von Vorteil, dass eine Außenabstützung und Herstellung eines Kühlkanales mit nur drei Reibschweißwulsten möglich ist. Es bildet sich keine Reibschweißwulst in der Brennraummulde und im Kolbenbodenbereich unterhalb der Mulde.

Ausgestaltungen zu den vorstehend beschriebenen Ausführungen sind in den Zeichnungen angegeben.

## Patentansprüche

1. Verfahren zur Herstellung eines zumindest einen Kühlkanal (2) aufweisenden Kolbens (1) für eine Brennkraftmaschine, der aus zumindest einem Oberteil (4) und einem Unterteil (5) hergestellt wird, wobei der Kühlkanal (2) des Kolbens (1) mit Hilfe des Oberteils (4) und des Unterteils (5) gebildet wird und das Oberteil (4) und das Unterteil (5) des Kolbens (1) jeweils mit Hilfe eines Schmiedeverfahrens hergestellt werden, **dadurch gekennzeichnet, dass** während des Schmiedens des Oberteils (4) in einem Bereich des zu schmiedenden Kühlkanals (2) des Oberteils (4) zusätzlich zumindest ein rippenartiges Element, insbesondere zumindest eine Rippe (9), mitgeschmiedet wird und/oder während des Schmiedens des Unterteils (5) in einem Bereich des zu schmiedenden Kühlkanals (2) des Unterteils (5) zusätzlich zumindest ein rippenartiges Element, insbesondere zumindest eine Rippe (9), mitgeschmiedet wird.

2. Verfahren zur Herstellung eines zumindest einen Kühlkanal (2) aufweisenden Kolbens (1) für eine Brennkraftmaschine, der aus zumindest einem Oberteil (4) und einem Unterteil (5) hergestellt wird, wobei der Kühlkanal (2) des Kolbens (1) mit Hilfe des Oberteils (4) und des Unterteils (5) gebildet wird und das Oberteil (4) des Kolbens (1) mit Hilfe eines Schmiedeverfahrens hergestellt wird, **dadurch gekennzeichnet, dass** während des Schmiedens des Oberteils (4) in einem Bereich des zu schmiedenden Kühlkanals (2) des Oberteils (4) zusätzlich zumindest ein rippenartiges Element, insbesondere zumindest eine Rippe (9), mitgeschmiedet wird.

3. Verfahren zur Herstellung eines zumindest einen Kühlkanal (2) aufweisenden Kolbens (1) für eine Brennkraftmaschine, der aus zumindest einem Oberteil (4) und einem Unterteil (5) hergestellt wird, wobei der Kühlkanal (2) des Kolbens (1) mit Hilfe des Oberteils (4) und des Unterteils (5) gebildet wird und das Unterteil (5) des Kolbens (1) mit Hilfe eines Schmiedeverfahrens hergestellt wird, **dadurch gekennzeichnet, dass** während des Schmiedens des Unterteils (5) in einem Bereich des zu schmiedenden Kühlkanals (2) des Unterteils (5) zusätzlich zumindest ein rippenartiges Element, insbesondere zumindest eine Rippe (9), mitgeschmiedet wird.

4. Verfahren nach einem der Ansprüche 1 bis 3, **dadurch gekennzeichnet, dass** das rippenartige Element senkrecht zur Umlaufrichtung des Kühlkanals (2) geschmiedet wird.

5. Verfahren nach einem der Ansprüche 1 bis 4, **dadurch gekennzeichnet, dass** das Oberteil (4) und das Unterteil (5) mittels eines Fügeverfahrens, insbesondere mittels Reibschweißen, zur Herstellung des Kolbens (1) miteinander verbunden werden.

6. Verfahren gemäß einem der Ansprüche 1 bis 5, **dadurch gekennzeichnet, dass** beim Schmieden des Oberteils (4) und/oder des Unterteils (5) zumindest zwei Schweißabstützungen, insbesondere eine Außenabstützung (7a) und eine Zentralabstützung (7b), mitgeschmiedet werden.

7. Kolben (1) für eine Brennkraftmaschine, der zumindest einen Kühlkanal (2) aufweist und aus zumindest einem Oberteil (4) und einem Unterteil (5) besteht, wobei der Kühlkanal (2) des Kolbens (1) mit Hilfe des Oberteils (4) und des Unterteils (5) gebildet ist, **dadurch gekennzeichnet, dass** der Kolben (1) nach einem Verfahren gemäß einem der Anprüche 1 bis 6 hergestellt worden ist.

8. Kolben (1) gemäß Anspruch 7, **dadurch gekennzeichnet, dass** der Kolben (1) aus einem Stahlwerkstoff besteht.

9. Kolben (1) gemäß Anspruch 7 oder Anspruch 8, **dadurch gekennzeichnet, dass** der Kolben (1) zumindest ein rippenartiges Element, insbesondere zumindest eine Rippe (9), in dem Kühlkanal (2) aufweist.

10. Kolben (1) gemäß Anspruch 9, **dadurch gekennzeichnet, dass** das rippenartige Element quer zur Umlaufrichtung des Kühlkanals (2) angeordnet ist.

11. Kolben (1) gemäß einem der Ansprüche 7 bis 10, **dadurch gekennzeichnet, dass** der Kolben (1) zumindest zwei Schweißabstützungen, insbesondere eine Außenabstützung (7a) und eine Zentralabstützung (7b), aufweist, die jeweils zumindest eine Schweißebene aufweisen, wobei die Schweißebene des Oberteils (4) und des Unterteils (5) in dem Bereich der Außenabstützung (7a) und in dem Bereich der Zentralabstützung (7b) in der gleichen Schweißebene angeordnet sind oder in unterschiedlichen Schweißebenen angeordnet sind.

12. Kolben (1) gemäß Anspruch 11, **dadurch gekennzeichnet, dass** die Schweißebene im Bereich der Außenabstützung (7a) und/oder in dem Bereich der Zentralabstützung (7b) bei dem Kolben (1) gekrümmt und/oder flach ausgeführt ist.

## Claims

1. Method for producing a piston (1) having at least one cooling channel (2) for an internal combustion engine, which piston is produced from at least an upper part (4) and a lower part (5), wherein the cooling channel (2) of the piston (1) is formed with the aid of the upper part (4) and the lower part (5), and the upper part (4) and the lower part (5) of the piston (1) are each produced with the aid of a forging process, **characterized in that** at least one rib-like element, in particular at least one rib (9), is additionally forged at the same time during the forging of the upper part (4) in a region of the cooling channel (2) of the upper part (4) which is to be forged and/or at least one rib-like element, in particular at least one rib (9), is additionally forged at the same time during the forging of the lower part (5) in a region of the cooling channel (2) of the lower part (5) which is to be forged.

2. Method for producing a piston (1) having at least one cooling channel (2) for an internal combustion engine, which piston is produced from at least an upper part (4) and a lower part (5), wherein the cooling channel (2) of the piston (1) is formed with the aid of the upper part (4) and the lower part (5), and the upper part (4) of the piston (1) is produced with the aid of a forging process, **characterized in that** at least one rib-like element, in particular at least one rib (9), is additionally forged at the same time during the forging of the upper part (4) in a region of the cooling channel (2) of the upper part (4) which is to be forged.

3. Method for producing a piston (1) having at least one cooling channel (2) for an internal combustion engine, which piston is produced from at least an upper part (4) and a lower part (5), wherein the cooling channel (2) of the piston (1) is formed with the aid of the upper part (4) and the lower part (5), and the lower part (5) of the piston (1) is produced with the aid of a forging process, **characterized in that** at least one rib-like element, in particular at least one rib (9), is additionally forged at the same time during the forging of the lower part (5) in a region of the cooling channel (2) of the lower part (5) which is to be forged.

4. Method according to one of Claims 1 to 3, **characterized in that** the rib-like element is forged perpendicular to the direction of circulation of the cooling channel (2).

5. Method according to one of Claims 1 to 4, **characterized in that** the upper part (4) and the lower part (5) are connected to one another by means of a joining process, in particular by means of friction welding, to produce the piston (1).

6. Method according to one of Claims 1 to 5, **characterized in that**, during the forging of the upper part (4) and/or of the lower part (5), at least two welding supports, in particular an outer support (7a) and a central support (7b), are forged at the same time.

7. Piston (1) for an internal combustion engine, which piston has at least one cooling channel (2) and consists of at least an upper part (4) and a lower part (5), wherein the cooling channel (2) of the piston (1) is formed with the aid of the upper part (4) and the lower part (5), **characterized in that** the piston (1) has been produced by a method according to one of Claims 1 to 6.

8. Piston (1) according to Claim 7, **characterized in that** the piston (1) consists of a steel material.

9. Piston (1) according to Claim 7 or Claim 8, **characterized in that** the piston (1) has at least one rib-like element, in particular at least one rib (9), in the cooling channel (2).

10. Piston (1) according to Claim 9, **characterized in that** the rib-like element is arranged transverse to the direction of circulation of the cooling channel (2).

11. Piston (1) according to one of Claims 7 to 10, **characterized in that** the piston (1) has at least two welding supports, in particular an outer support (7a) and a central support (7b), which each have at least one welding plane, wherein the respective welding planes of the upper part (4) and of the lower part (5) are arranged in the region of the outer support (7a) and in the region of the central support (7b) in the same welding plane, or are arranged in different welding planes.

12. Piston (1) according to Claim 11, **characterized in that** the welding plane in the region of the outer support (7a) and/or in the region of the central support (7b) in the piston (1) has a curved and/or flat configuration.

## Revendications

1. Procédé de fabrication d'un piston (1) présentant au moins un canal de refroidissement (2), pour un moteur à combustion interne, qui est fabriqué au moins à partir d'une partie supérieure (4) et d'une partie inférieure (5), le canal de refroidissement (2) du piston (1) étant formé à l'aide de la partie supérieure (4) et de la partie inférieure (5) et la partie supérieure (4) et la partie inférieure (5) du piston (1) étant à chaque fois fabriquées à l'aide d'un procédé de forgeage, **caractérisé en ce que** pendant le forgeage de la partie supérieure (4), dans une région du canal de refroidissement à forger (2) de la partie supérieure (4), au moins un élément de type ailette, en particulier au moins une ailette (9) est en outre forgé(e) en même temps, et/ou pendant le forgeage de la partie inférieure (5), dans une région du canal de refroidissement à forger (2) de la partie inférieure (5), au moins un élément de type ailette, en particulier au moins une ailette (9) est en outre forgé(e) en même temps.

2. Procédé de fabrication d'un piston (1) présentant au moins un canal de refroidissement (2), pour un moteur à combustion interne, qui est fabriqué au moins à partir d'une partie supérieure (4) et d'une partie inférieure (5), le canal de refroidissement (2) du piston (1) étant formé à l'aide de la partie supérieure (4) et de la partie inférieure (5) et la partie supérieure (4) du piston (1) étant fabriquée à l'aide d'un procédé de forgeage, **caractérisé en ce que** pendant le forgeage de la partie supérieure (4), dans une région du canal de refroidissement à forger (2) de la partie supérieure (4), au moins un élément de type ailette, en particulier au moins une ailette (9) est en outre forgé(e) en même temps.

3. Procédé de fabrication d'un piston (1) présentant au moins un canal de refroidissement (2), pour un moteur à combustion interne, qui est fabriqué à partir d'au moins une partie supérieure (4) et d'une partie inférieure (5), le canal de refroidissement (2) du piston (1) étant formé à l'aide de la partie supérieure (4) et de la partie inférieure (5) et la partie inférieure (5) du piston (1) étant fabriquée à l'aide d'un procédé de forgeage, **caractérisé en ce que** pendant le forgeage de la partie inférieure (5), dans une région du canal de refroidissement à forger (2) de la partie inférieure (5), au moins un élément de type ailette, en particulier au moins une ailette (9) est en outre forgé(e) en même temps.

4. Procédé selon l'une quelconque des revendications 1 à 3, **caractérisé en ce que** l'élément de type ailette est forgé perpendiculairement à la direction périphérique du canal de refroidissement (2).

5. Procédé selon l'une quelconque des revendications 1 à 4, **caractérisé en ce que** la partie supérieure (4) et la partie inférieure (5) sont connectées l'une à l'autre au moyen d'un procédé d'assemblage, en particulier par soudage par friction, pour fabriquer le piston (1).

6. Procédé selon l'une quelconque des revendications 1 à 5, **caractérisé en ce que** lors du forgeage de la partie supérieure (4) et/ou de la partie inférieure (5), au moins deux supports de soudage, en particulier un support extérieur (7a) et un support central (7b), sont forgés en même temps.

7. Piston (1) pour un moteur à combustion interne, qui présente au moins un canal de refroidissement (2) et qui se compose au moins d'une partie supérieure (4) et d'une partie inférieure (5), le canal de refroidissement (2) du piston (1) étant formé à l'aide de la partie supérieure (4) et de la partie intérieure (5), **caractérisé en ce que** le piston (1) a été fabriqué selon un procédé selon l'une quelconque des revendications 1 à 6.

8. Piston (1) selon la revendication 7, **caractérisé en ce que** le piston (1) se compose d'un matériau à base d'acier.

9. Piston (1) selon la revendication 7 ou la revendication 8, **caractérisé en ce que** le piston (1) présente au moins un élément de type ailette, en particulier au moins une ailette (9), dans le canal de refroidissement (2).

10. Piston (1) selon la revendication 9, **caractérisé en ce que** l'élément de type ailette est disposé transversalement à la direction périphérique du canal de refroidissement (2).

11. Piston (1) selon l'une quelconque des revendications 7 à 10, **caractérisé en ce que** le piston (1) présente au moins deux supports de soudage, en particulier un support extérieur (7a) et un support central (7b), qui présentent chacun au moins un plan de soudage, les plans de soudage respectifs de la partie supérieure (4) et de la partie inférieure (5) étant disposés dans la région du support extérieur (7a) et dans la région du support central (7b) dans le même plan de soudage ou étant disposés dans des plans de soudage différents.

12. Piston (1) selon la revendication 11, **caractérisé en ce que** le plan de soudage dans la région du support extérieur (7a) et/ou dans la région du support central (7b) au niveau du piston (1) est réalisé sous forme courbe et/ou plate.
